# EUROPEAN PATENT APPLICATION

(11) **EP 4 436 259 A1**
(43) Date of publication of application: **25.09.2024**
(21) Application number: 21964353.3
(22) Date of filing: 17.11.2021
(51) Int. Cl.: H04W 40/36, H04W 36/00

(54) **NETWORK TASK PROCESSING METHOD AND APPARATUS BASED ON ARTIFICIAL INTELLIGENCE, AND STORAGE MEDIUM**

(71) Applicant: Beijing Xiaomi Mobile Software Co., Ltd., Beijing 100085 (CN)
(72) Inventor: MU, Qin, Beijing 100085 (CN); QIAO, Xuemei, Beijing 100085 (CN); XIONG, Kexin, Beijing 100085 (CN)
(74) Representative: Kudlek, Franz Thomas
(86) International application number: PCT/CN2021/131312
(87) International publication number: WO 2023/087190

(57) **Abstract**

The present disclosure provides a network task processing method and apparatus based on AI, and a storage medium. The method is performed by a terminal, and includes: determining an AI processing decision in response to a cell access operation occurring during a process of performing, with an AI mode, a network task by the terminal, where the AI processing decision includes at least one of stopping processing, based on an AI inference result, a task, forwarding the AI inference result to a target node by a node currently performing an inference task, or forwarding an AI inference model and inference data to a node subsequently performing the inference task by the node currently performing the inference task; and processing, based on the AI processing decision, the network task. Therefore, the continuity and accuracy of the AI inference result determined for the terminal is ensured, so that the terminal can accurately perform AI-based processing for the task.

## Description

### TECHNICAL FIELD

The present disclosure relates to the field of communication technologies, in particular to a network task processing method and apparatus based on artificial intelligence (AI), and a storage medium.

### BACKGROUND

In a wireless communication technology, a network device and a terminal support a communication decision based on an intelligent analysis result of artificial intelligence (Al). For example, in some scenarios, the terminal initiates an AI analysis request to the network device and provides inference data, the network device performs model inference based on the inference data and feeds, after performing the model inference, the inference result to the terminal, and the terminal performs a corresponding strategy based on the inference result.

However, in the related art, the terminal has high mobility, and in a process of interacting with the network device to realize the AI inference task, there will be a scenario in which the terminal performs the handover for network nodes. In this case, the terminal needs to give up the inference result provided by the current AI inference task. The terminal, after establishing a wireless connection with the target node, re-initiate the AI analysis request to the network device, and the network device will formulate the AI inference scheme for the terminal again and deploy the AI model in the network node responsible for performing the AI inference task. This process will bring signaling overhead and increase workload of the network.

### SUMMARY

To overcome the problems in the related art, the present disclosure provides a network task processing method and apparatus based on artificial intelligence (AI), and storage medium.

According to a first aspect of embodiments of the present disclosure, there is provided a network task processing method based on AI, performed by a terminal, and including: determining an AI processing decision in response to a cell access operation occurring during a process of performing, with an AI mode, a network task by the terminal, where the AI processing decision includes at least one of stopping processing, based on an AI inference result, a task, forwarding the AI inference result to a target node by a node currently performing an inference task, or forwarding an AI inference model and inference data to a node subsequently performing the inference task by the node currently performing the inference task; and processing, based on the AI processing decision, the network task.

In an embodiment, determining the AI processing decision includes: transmitting decision-related information to a network device, where the decision-related information includes at least one of remaining computing power, storage information, a task real-time requirement, or a task accuracy requirement; and receiving the AI processing decision transmitted by the network device, where the AI processing decision is determined by the network device based on the decision-related information.

In an embodiment, the AI processing decision includes stopping processing, based on the AI inference result, the task, and processing, based on the AI processing decision, the network task includes: stopping processing, based on the AI inference result, the task.

In an embodiment, the AI processing decision includes stopping processing, based on the AI inference result, the task, and processing, based on the AI processing decision, the network task includes: transmitting a notification message to the node currently performing the inference task, where the notification message is configured to instruct the node currently performing the inference task to stop performing AI inference.

In an embodiment, the AI processing decision includes forwarding the AI inference result to the target node by the node currently performing the inference task, and processing, based on the AI processing decision, the network task includes: receiving the AI inference result transmitted by the target node, and performing Al-based processing for the network task based on the AI inference result.

In an embodiment, the AI processing decision includes forwarding the AI inference model and the inference data to the node subsequently performing the inference task by the node currently performing the inference task; and processing, based on the AI processing decision, the network task includes: determining a source node which the terminal accesses, the target node which the terminal accesses after performing handover, the node currently performing the inference task, and the node subsequently performing the inference task; and obtaining, based on the source node which the terminal accesses, the target node which the terminal accesses after performing the handover, the node currently performing the inference task, and the node subsequently performing the inference task, the AI inference result, and performing AI-based processing for the network task based on the AI inference result.

In an embodiment, obtaining, based on the source node which the terminal accesses, the target node which the terminal accesses after performing the handover, the node currently performing the inference task, and the node subsequently performing the inference task, the AI inference result includes:
in response to the source node being a first next generation node B (gNB), the target node being a second gNB, or a next generation node B distributed unit (gNB-DU) under a same next generation node B control unit (gNB-CU) as the first gNB, the node currently performing the inference task being a gNB, and the node subsequently performing the inference task being a gNB-CU or a gNB-DU, receiving the AI inference result transmitted by the node subsequently performing the inference task;
in response to the source node being the first gNB, the target node being the second gNB, or the gNB-DU under the same gNB-CU as the first gNB, the node currently performing the inference task being the terminal and the gNB-CU, or the terminal and the gNB-DU, and the node subsequently performing the inference task being the gNB-CU, or the gNB-DU, transmitting a first part of the inference model to the node subsequently performing the inference task, and receiving the AI inference result transmitted by the node subsequently performing the inference task;
in response to the source node being the first gNB, the target node being the second gNB, or the gNB-DU under the same gNB-CU as the first gNB, or an evolved node B (eNB), and the node currently performing the inference task being the gNB, or the terminal and the gNB-CU, or the terminal and the gNB-DU, and the node subsequently performing the inference task being the terminal, receiving the inference model transmitted by the node currently performing the inference task, and determining the AI inference result based on the inference model;
in response to the source node being the first gNB, the target node being the second gNB, or the gNB-DU under the same gNB-CU as the first gNB, the node currently performing the inference task being the gNB, or the terminal and the gNB-CU, or the terminal and the gNB-DU, and the node subsequently performing the inference task being the terminal and the gNB-CU, or the terminal and the gNB-DU, receiving the AI inference result corresponding to a second part of the inference model transmitted by the gNB-CU or the gNB-DU;
in response to the source node being the first gNB, the target node being the eNB, the node currently performing the inference task being the gNB, or the terminal and the gNB-CU, or the terminal and the gNB-DU, and the node subsequently performing the inference task being a third gNB deployed by operation administration and maintenance (OAM), receiving the AI inference result transmitted by the third gNB;
in response to the source node being the eNB, the target node being the gNB, the node currently performing the inference task being the gNB, and the node subsequently performing the inference task being the gNB deployed by the OAM, or the terminal and the gNB-CU, or the terminal and the gNB-DU, receiving the AI inference result transmitted by the node subsequently performing the inference task; and
in response to the source node being the eNB, the target node being the eNB, the node currently performing the inference task being the gNB, and the node subsequently performing the inference task being the gNB deployed by the OAM, receiving the AI inference result transmitted by a target eNB.

According to a second aspect of embodiments of the present disclosure, there is provided a network task processing method based on AI, performed by a network device, and including: determining an AI processing decision, where the AI processing decision includes at least one of: stopping processing, based on an AI inference result, a task, forwarding the AI inference result to a target node by a node currently performing an inference task, or forwarding an AI inference model and inference data to a node subsequently performing the inference task by the node currently performing the inference task; and processing, based on the AI processing decision, a network task.

In an embodiment, determining the AI processing decision includes: receiving decision-related information, where the decision-related information includes at least one of: remaining computing power, storage information, a task real-time requirement, or a task accuracy requirement; and determining, based on the decision-related information, the AI processing decision.

In an embodiment, the method further includes: transmitting the AI processing decision to the terminal.

In an embodiment, the AI processing decision includes stopping processing, based on the AI inference result, the task, and the method further includes: receiving, in response to the network device being the node currently performing the inference task, a notification message transmitted by the terminal, where the notification message is configured to instruct the node currently performing the inference task to stop performing AI inference; and stopping performing the AI inference.

In an embodiment, the AI processing decision includes forwarding the AI inference result to the target node by the node currently performing the inference task, and processing, based on the AI processing decision, the network task includes: forwarding, in response to the network device being the node currently performing the inference task, the AI inference result to the target node.

**In** an embodiment, the AI processing decision includes forwarding the AI inference result to the target node by the node currently performing the inference task, and processing, based on the AI processing decision, the network task includes: receiving, in response to the network device being the target node which the terminal accesses after performing handover, the AI inference result forwarded by the node currently performing the inference task, and transmitting the AI inference result to the terminal.

In an embodiment, the AI processing decision includes forwarding the AI inference model and the inference data to the node subsequently performing the inference task by the node currently performing the inference task, and processing, based on the AI processing decision, the network task includes: forwarding, in response to the network device being the node currently performing the inference task, the AI inference model and the inference data to the node subsequently performing the inference task.

In an embodiment, the AI processing decision includes forwarding the AI inference model and the inference data to the node subsequently performing the inference task by the node currently performing the inference task, and processing, based on the AI processing decision, the network task includes: receiving, in response to the network device being the node subsequently performing the inference task, the AI inference model and the inference data forwarded by the node currently performing the inference task; and determining, based on the AI inference model and the inference data, the AI inference result, and transmitting the AI inference result to the terminal.

According to a third aspect of embodiments of the present disclosure, there is provided a network task processing apparatus based on AI, including: a processing unit, configured to determine an AI processing decision in response to a cell access operation occurring during a process of performing, with an AI mode, a network task by the terminal, and process, based on the AI processing decision, the network task, where the AI processing decision includes at least one of: stopping processing, based on an AI inference result, a task, forwarding the AI inference result to a target node by a node currently performing an inference task, or forwarding an AI inference model and inference data to a node subsequently performing the inference task by the node currently performing the inference task.

In an embodiment, the processing unit is configured to: transmit decision-related information to a network device, where the decision-related information includes at least one of: remaining computing power, storage information, a task real-time requirement, or a task accuracy requirement; and receive the AI processing decision transmitted by the network device, where the AI processing decision is determined by the network device based on the decision-related information. The processing unit determines the AI processing decision received by the receiving unit as an AI processing decision.

In an embodiment, the AI processing decision includes stopping processing, based on the AI inference result, the task, and the processing unit is configured to stop processing, based on the AI inference result, the task.

In an embodiment, the AI processing decision includes stopping processing, based on the AI inference result, the task, and the processing unit is configured to transmit a notification message to the node currently performing the inference task, where the notification message is configured to instruct the node currently performing the inference task to stop performing AI inference.

In an embodiment, the AI processing decision includes forwarding the AI inference result to the target node by the node currently performing the inference task, and the processing unit is configured to: receive the AI inference result transmitted by the target node, and perform Al-based processing for the network task based on the AI inference result.

In an embodiment, the AI processing decision includes forwarding the AI inference model and the inference data to the node subsequently performing the inference task by the node currently performing the inference task, and the processing unit is configured to: determine a source node which the terminal accesses, the target node which the terminal accesses after performing handover, the node currently performing the inference task, and the node subsequently performing the inference task; and obtain, based on the source node which the terminal accesses, the target node which the terminal accesses after performing the handover, the node currently performing the inference task, and the node subsequently performing the inference task, the AI inference result, and perform AI-based processing for the network task based on the AI inference result.

In an embodiment, in response to the source node being a first next generation node B (gNB), the target node being a second gNB, or a next generation node B distributed unit (gNB-DU) under a same next generation node B control unit (gNB-CU) as the first gNB, the node currently performing the inference task being a gNB, and the node subsequently performing the inference task being a gNB-CU or a gNB-DU, the processing unit is configured to receive the AI inference result transmitted by the node subsequently performing the inference task.

In an embodiment, in response to the source node being the first gNB, the target node being the second gNB, or the gNB-DU under the same gNB-CU as the first gNB, the node currently performing the inference task being the terminal and the gNB-CU, or the terminal and the gNB-DU, and the node subsequently performing the inference task being the gNB-CU, or the gNB-DU, the processing unit is configured to: transmit a first part of the inference model to the node subsequently performing the inference task, and receive the AI inference result transmitted by the node subsequently performing the inference task.

In an embodiment, in response to the source node being the first gNB, the target node being the second gNB, or the gNB-DU under the same gNB-CU as the first gNB, or an evolved node B (eNB), and the node currently performing the inference task being the gNB, or the terminal and the gNB-CU, or the terminal and the gNB-DU, and the node subsequently performing the inference task being the terminal, the processing unit is configured to: receive the inference model transmitted by the node currently performing the inference task, and determine the AI inference result based on the inference model.

In an embodiment, in response to the source node being the first gNB, the target node being the second gNB, or the gNB-DU under the same gNB-CU as the first gNB, the node currently performing the inference task being the gNB, or the terminal and the gNB-CU, or the terminal and the gNB-DU, and the node subsequently performing the inference task being the terminal and the gNB-CU, or the terminal and the gNB-DU, the processing unit is configured to receive the AI inference result corresponding to a second part of the inference model transmitted by the gNB-CU or the gNB-DU.

In an embodiment, in response to the source node being the first gNB, the target node being the eNB, the node currently performing the inference task being the gNB, or the terminal and the gNB-CU, or the terminal and the gNB-DU, and the node subsequently performing the inference task being a third gNB deployed by operation administration and maintenance (OAM), the processing unit is configured to receive the AI inference result transmitted by the third gNB.

In an embodiment, in response to the source node being the eNB, the target node being the gNB, the node currently performing the inference task being the gNB, and the node subsequently performing the inference task being the gNB deployed by the OAM, or the terminal and the gNB-CU, or the terminal and the gNB-DU, the processing unit is configured to receive the AI inference result transmitted by the node subsequently performing the inference task.

In an embodiment, in response to the source node being the eNB, the target node being the eNB, the node currently performing the inference task being the gNB, and the node subsequently performing the inference task being the gNB deployed by the OAM, the processing unit is configured to receive the AI inference result transmitted by a target eNB.

According to a fourth aspect of embodiments of the present disclosure, there is provided a network task processing apparatus based on AI, including: a processing unit, configured to determine an AI processing decision, and process the network task based on the AI processing decision, where the AI processing decision includes at least one of: stopping processing, based on an AI inference result, a task, forwarding the AI inference result to a target node by a node currently performing an inference task, or forwarding an AI inference model and inference data to a node subsequently performing the inference task by the node currently performing the inference task.

In an embodiment, the processing unit is configured to: receive decision-related information, where the decision-related information includes at least one of: remaining computing power, storage information, a task real-time requirement, or a task accuracy requirement; and determine, based on the decision-related information, the AI processing decision.

In an embodiment, the network task processing apparatus based on AI further includes a transmitting unit, and the transmitting unit is configured to transmit the AI processing decision to the terminal.

In an embodiment, the AI processing decision includes stopping processing, based on the AI inference result, the task. The network task processing apparatus based on AI further includes a receiving unit, and the receiving unit is configured to: receive, in response to the network device being the node currently performing the inference task, a notification message transmitted by the terminal, where the notification message is configured to instruct the node currently performing the inference task to stop performing AI inference; and stop performing the AI inference.

In an embodiment, the AI processing decision includes forwarding the AI inference result to the target node by the node currently performing the inference task, and the processing unit is configured to forward, in response to the network device being the node currently performing the inference task, the AI inference result to the target node.

In an embodiment, the AI processing decision includes forwarding the AI inference result to the target node by the node currently performing the inference task, and the processing unit is configured to: receive, in response to the network device being the target node which the terminal accesses after performing handover, the AI inference result forwarded by the node currently performing the inference task, and transmit the AI inference result to the terminal.

In an embodiment, the AI processing decision includes forwarding the AI inference model and the inference data to the node subsequently performing the inference task by the node currently performing the inference task, and the processing unit is configured to: forward, in response to the network device being the node currently performing the inference task, the AI inference model and the inference data to the node subsequently performing the inference task.

In an embodiment, the AI processing decision includes forwarding the AI inference model and the inference data to the node subsequently performing the inference task by the node currently performing the inference task, and the processing unit is configured to: receive, in response to the network device being the node subsequently performing the inference task, the AI inference model and the inference data forwarded by the node currently performing the inference task; and determine, based on the AI inference model and the inference data, the AI inference result, and transmit the AI inference result to the terminal.

According to a fifth aspect of embodiments of the present disclosure, there is provided a network task processing device based on AI, including: a processor; and a memory storing instructions executable by the processor; where the instructions, when executed by the processor, cause the processor to perform any one of the methods of the first aspect.

According to a sixth aspect of embodiments of the present disclosure, there is provided a network task processing device based on AI, including: a processor; a memory storing processor-executable instructions; where the instructions, when executed by the processor, cause the processor to perform the any one of methods of the second aspect.

According to a seventh aspect of embodiments of the present disclosure, there is provided a storage medium storing instructions, where the instructions, when executed by a processor, cause the processor to perform any one of the methods of the first aspect.

According to an eighth aspect of embodiments of the present disclosure, there is provided a storage medium storing instructions, where the instructions, when executed by a processor, cause the processor to perform any one of the methods of the second aspect.

The technical solution provided by embodiments of the present disclosure may include the following beneficial effect: in the process of performing, with the AI mode, the network task by the terminal, if a cell access operation occurs on the terminal, the network task can be processed by at least one of: stopping processing, based on an AI inference result, a task, forwarding the AI inference result to a target node by a node currently performing an inference task, or forwarding an AI inference model and inference data to a node subsequently performing the inference task by the node currently performing the inference task, and the mobility in the wireless network AI application scenario is managed. Thereby, the continuity and accuracy of the AI inference result determined for the terminal is ensured, so that the terminal can accurately perform AI-based processing for the task.

It is to be understood that the above general descriptions and the below detailed descriptions are merely exemplary and explanatory, and are not intended to limit the present disclosure.

### BRIEF DESCRIPTION OF THE DRAWINGS

The accompanying drawings, which are incorporated in and constitute a part of this specification, illustrate examples consistent with the present disclosure and, together with the description, serve to explain the principles of the disclosure.
FIG. 1 is a schematic diagram illustrating a working framework based on AI according to an embodiment of the present disclosure.
FIG. 2 is a schematic diagram illustrating a network architecture for an AI mobility management method of wireless network according to an embodiment of the present disclosure.
FIG. 3 is a flowchart illustrating a network task processing method based on AI according to an embodiment of the present disclosure.
FIG. 4 is a flowchart illustrating a network task processing method based on AI according to another embodiment of the present disclosure.
FIG. 5 is a flowchart illustrating a network task processing method based on AI according to yet another embodiment of the present disclosure.
FIG. 6 is a flowchart illustrating a network task processing method based on AI according to still another embodiment of the present disclosure.
FIG. 7 is a flowchart illustrating a network task processing method based on AI according to still another embodiment of the present disclosure.
FIG. 8 is a flowchart illustrating a network task processing method based on AI according to still another embodiment of the present disclosure.
FIG. 9 is a flowchart illustrating a network task processing method based on AI according to still another embodiment of the present disclosure.
FIG. 10 is a flowchart illustrating a network task processing method based on AI according to still another embodiment of the present disclosure.
FIG. 11 is a flowchart illustrating a network task processing method based on AI according to still another embodiment of the present disclosure.
FIG. 12 is a flowchart illustrating a network task processing method based on AI according to still another embodiment of the present disclosure.
FIG. 13 is a flowchart illustrating a network task processing method based on AI according to still another embodiment of the present disclosure.
FIG. 14 is a flowchart illustrating a network task processing method based on AI according to still another embodiment of the present disclosure.
FIG. 15 is a flowchart illustrating a network task processing method based on AI according to still another embodiment of the present disclosure.
FIG. 16 is a block diagram illustrating a network task processing apparatus based on AI according to an embodiment of the present disclosure.
FIG. 17 is a block diagram illustrating a network task processing apparatus based on AI according to another embodiment of the present disclosure.
FIG. 18 is a block diagram illustrating a network task processing device based on AI according to an embodiment of the present disclosure.
FIG. 19 is a block diagram illustrating a network task processing device based on AI according to another embodiment of the present disclosure.

### DETAILED DESCRIPTION OF THE EMBODIMENTS

Examples will be described in detail herein, with the illustrations thereof represented in the drawings. Where the following description relates to the drawings, unless otherwise indicated, the same numerals in different drawings represent the same or similar elements. The embodiments described in the following exemplary embodiments do not represent all embodiments consistent with the present disclosure.

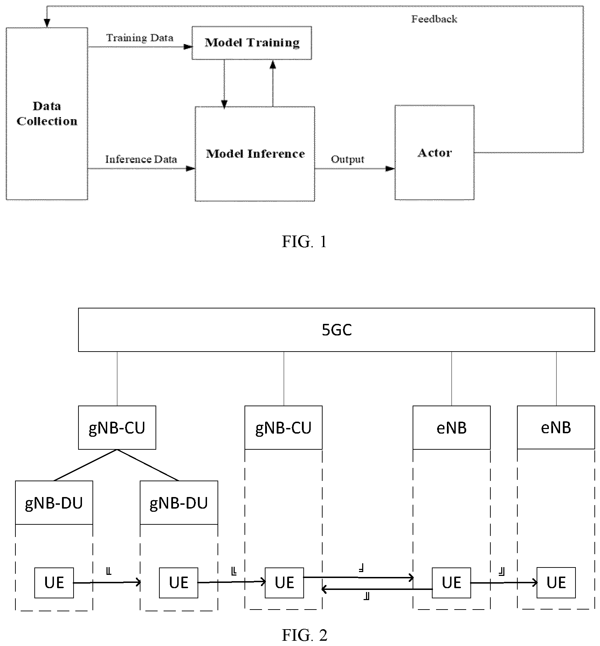

The 3rd generation partnership project (3GPP) has investigated new radio (NR) and EUTRA-NR dual connectivity (ENDC) data collection enhancements and discussed the use of artificial intelligence and machine learning to achieve network optimization for network task processing. At present, R17 has reached a preliminary consensus on the AI working framework of wireless network. FIG. 1 is a schematic diagram illustrating a working framework based on AI according to an embodiment of the present disclosure. As shown in FIG. 1, the working framework mainly includes the following functional modules/units: a data collection functional module, a model training functional module, a model inference functional module, and an action functional module.
(1) The data collection functional module: a data collection function and a data preprocessing function are included, the data collection can be executed in multiple network elements, and the data provided include measurement data, feedback performance data, and model performance data.
(2) The model training functional module: a better model for inference is obtained by iterating the machine learning model through computation and processing, and the inputs include training data and model performance feedback.
(3) The model inference functional module: predictions or decisions are generated by the trained AI (machine learning/deep learning) model.
(4) The action functional module: the strategy is formulated and performed by using the model inference result, and the relevant performance result is fed back to the data collection functional module after the strategy is performed.

The action functional module formulates and performs the strategy by using the model inference result, and feeds back the relevant performance result to the data collection functional module after the strategy is performed. The data collection functional module (actor) is responsible for providing the training data and the inference data required by the model training functional module and the model inference functional module. The data collection functional module can obtain feedback data from the actor. The model inference functional module performs the inference by using the collected inference data and the stored machine learning model, and transmits the generated inference result to the actor.

More and more smart terminals access a 5th generation (5G) network, and in order to provide users with a high-quality service experience, the network needs to provide users with intelligent analysis results to guide decisions of the users. That is, in many scenarios, the terminal can serve as an actor in the AI working framework of the wireless network. The network device provides intelligent analysis results to the terminal based on the needs of the terminal.

FIG. 2 is a schematic diagram illustrating a network architecture for an AI mobility management method of wireless network according to an embodiment of the present disclosure. In the network architecture shown in FIG. 2, the terminal can process the network task with the AI mode. However, during processing the network task with the AI mode, the terminal will move, so there is a scenario of cell handover. FIG. 2 shows several situations in which the terminal moves and performs the handover, as the following situations.

① The terminal hands over from a source next generation node B distributed unit (gNB-DU) to a target gNB-DU under the same next generation node B control unit (gNB-CU). ② The terminal hands over from a source gNB to a target gNB. (3) The terminal hands over from the source gNB to a target evolved node B (eNB). ④ The terminal hands over from a source eNB to the target gNB. (5) The user equipment (UE) hands over from the source eNB to the target eNB.

Of course, all the embodiments of the present disclosure are exemplified by the 5G gNB and the long term evolution (LTE) eNB. It will be understood by those skilled in the art that these embodiments are only examples for the convenience of understanding. All technical solutions of the embodiments of the present disclosure can be applied to any generation of communication technologies, including, but being not limited to, LTE, 5G, and subsequent B5G, 6G, etc. Moreover, the base station can also be a macrocell, a picocell, a non terrestrial network (NTN) base station, a femtocell, and so on, which are collectively referred to as a "base station". Of course, the naming of the base station of the subsequent communication system is still unclear, therefore, the device which the UE accesses is collectively referred to as a "base station" in the present disclosure.

It is to be noted that in order to provide the user with continuous and high-quality services, the user needs to provide the inference data in real time, and the network device needs to perform the model inference in real time and feed back the inference result to the user. However, the terminal is mobile, and to accommodate the mobility of the terminal, the terminal performs cell handover. When the terminal processes the network task with the AI mode, there is also a cell access operation (such as a cell handover scenario, a re-accessing scenario, or other scenarios). Illustrated by the example of the cell handover, if the cell handover occurs during the terminal processing the network task with the AI mode, there will be some problems in the delivery of AI inference results, and the AI inference task will not be performed smoothly. How to solve the mobility management problem under the AI application scenario of the wireless network is an urgent research topic.

In the related art, if a cell access operation (e.g., a cell handover scenario, a re-accessing scenario, or some other scenarios) occurs when the terminal is performing an AI task, the terminal abandons the AI inference results that can be provided by the current AI inference task, and employs other ways (e.g., some conventional methods) to make a relevant decision. The terminal, after establishing a wireless connection with the access node, re-initiate the AI analysis request to the network side, and the network side will formulate the AI inference scheme for the terminal again and deploy the AI model in the network node responsible for performing the AI inference task. However, the method of re-establishing the connection with the network node and obtaining the AI inference result will bring large signaling overhead and communication overhead for AI model transmission, and the network workload is increased.

Embodiments of the present disclosure provide a network task processing method based on AI. In the case of a cell access operation (e.g., a cell handover scenario, a re-accessing scenario, or some other scenarios in which the UE needs to be disconnected from the current cell) occurring during a process of performing the network task by the terminal with the AI mode, the AI processing decision such as inference data, an inference model, and an AI inference result required for AI inference is standardized, so as to guarantee the continuity and accuracy of the AI inference result required by the terminal when the AI mode is adopted.

In an embodiment, in the case of the cell access operation (e.g., a cell handover scenario, a re-accessing scenario, or some other scenarios in which the UE needs to be disconnected from the current cell) occurring during a process of performing the network task by the terminal with the AI mode, the AI processing decision includes at least one of stopping processing, based on an AI inference result, a task, forwarding the AI inference result to a target node by a node currently performing an inference task, or forwarding an AI inference model and inference data to a node subsequently performing the inference task by the node currently performing the inference task.

In all embodiments of the present disclosure, the node subsequently performing the inference task may be either the current node or another node, which is not limited by the embodiments of the present disclosure.

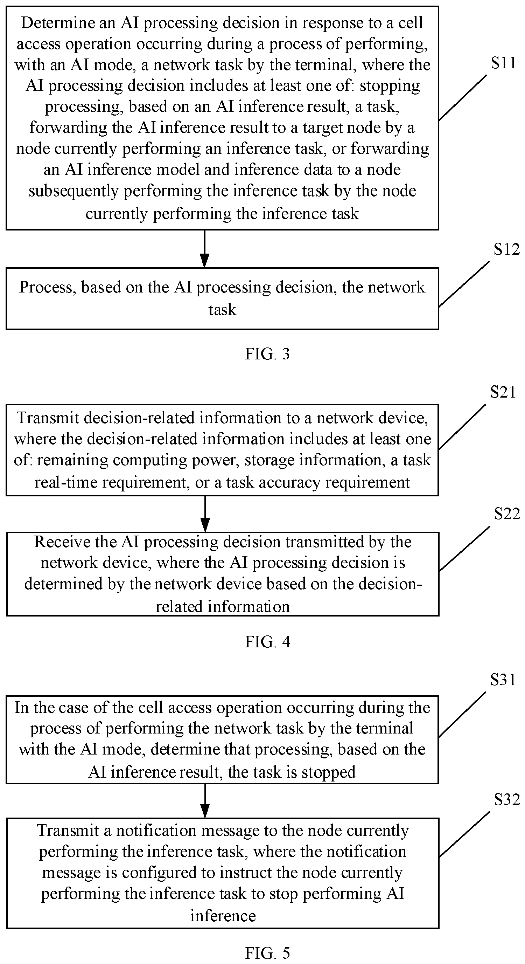

FIG. 3 is a flowchart illustrating a network task processing method based on AI according to an embodiment of the present disclosure. As shown in FIG. 3, the network task processing method based on AI is performed by a terminal, and includes the following steps S11 to S12.

At step S11, an AI processing decision is determined in response to a cell access operation (e.g., a cell handover scenario, a re-accessing scenario, or some other scenarios in which the UE needs to be disconnected from the current cell) occurring during a process of performing, with an AI mode, a network task by the terminal.

The AI processing decision includes at least one of:
A: stopping processing, based on an AI inference result, a task;
B: forwarding the AI inference result to a target node by a node currently performing an inference task; or
C: forwarding an AI inference model and inference data to a node subsequently performing the inference task by the node currently performing the inference task.

At step S12, the network task is processed based on the AI processing decision.

**In** an embodiment, in the case of the cell access operation (e.g., a cell handover scenario, a re-accessing scenario, or some other scenarios in which the UE needs to be disconnected from the current cell) occurring during the process of performing the network task by the terminal with the AI mode, at least one of: stopping processing, based on an AI inference result, a task, forwarding the AI inference result to a target node by a node currently performing an inference task, or forwarding an AI inference model and inference data to a node subsequently performing the inference task by the node currently performing the inference task can be adopted. Therefore, in the case of the cell access operation (e.g., a cell handover scenario, a re-accessing scenario, or some other scenarios in which the UE needs to be disconnected from the current cell) occurring during the process of performing the network task by the terminal with the AI mode, processing, based on the determined AI processing decision, the network task can be guaranteed.

In the embodiments of the present disclosure, on the one hand, the AI processing decision may be determined by the terminal based on any one of a usage scenario, a requirement, and a communication standard. On the other hand, the AI processing decision may also be determined by the network device and transmitted to the terminal by the network device, and the terminal receives the AI processing decision transmitted by the network device. The network device may be determined based on any one of a usage scenario, a requirement, and a communication standard. On the further hand, the AI processing decision may also be determined by each of the network device and the terminal according to the same guideline.

FIG. 4 is a flowchart illustrating a network task processing method based on AI according to another embodiment of the present disclosure. As shown in FIG. 4, the network task processing method based on AI is performed by a terminal, and includes the following steps S21 to S22.

At step 21, decision-related information is transmitted to a network device, where the decision-related information includes at least one of remaining computing power, storage information, a task real-time requirement, or a task accuracy requirement.

At step S22, the AI processing decision transmitted by the network device is received, where the AI processing decision is determined by the network device based on the decision-related information.

It will be understood that the AI processing decision which is determined by the network device based on the decision-related information in the embodiments of the present disclosure may be stopping processing, based on an AI inference result, a task, forwarding the AI inference result to a target node by a node currently performing an inference task, or forwarding an AI inference model and inference data to a node subsequently performing the inference task by the node currently performing the inference task.

In all embodiments of the present disclosure, for example, in the cell handover scenario, the source node and the target node may be different nodes; in the scenario of re-accessing the source node when the cell handover fails, the source node and the target node may be the same node; in the scenario of transitioning from an idle state to a connected state, the source node and the target node may be the same node. Therefore, although referred to as the source node, the target node, and the subsequent node in the embodiments of the present disclosure, there is no limitation as to whether these nodes are the same node or different nodes, i.e., these nodes may be the same node or different nodes.

In an embodiment, the AI processing decision includes stopping processing, based on the AI inference result, the task, that is first described in the present disclosure.

In the embodiments of the present disclosure, in the case of the cell access operation (e.g., a cell handover scenario, a re-accessing scenario, or some other scenarios in which the UE needs to be disconnected from the current cell) occurring during the process of performing the network task by the terminal with the AI mode, when the network device determines that the terminal falls back to task processing with a non-AI mode, the network device may transmit an indication message (fallback indication message) to the terminal, where the indication message is configured to indicate that the terminal stops processing, based on the AI inference result, the task, which can also be understood as discarding the AI inference result and processing the task with the non-AI mode.

In the embodiments of the present disclosure, if the AI processing decision includes stopping processing, based on the AI inference result, the task, the terminal may transmit a notification message to the node currently performing the inference task, and the notification message is configured to instruct the node currently performing the inference task to stop performing AI inference, to further save processing overhead.

FIG. 5 is a flowchart illustrating a network task processing method based on AI according to yet another embodiment of the present disclosure. As shown in FIG. 5, the network task processing method based on AI is performed by a terminal, and includes the following steps S31 to S32.

At step S31, in the case of the cell access operation (e.g., a cell handover scenario, a re-accessing scenario, or some other scenarios) occurring during the process of performing the network task by the terminal with the AI mode, it is determined that processing, based on the AI inference result, the task is stopped.

At step S32, a notification message is transmitted to the node currently performing the inference task, where the notification message is configured to instruct the node currently performing the inference task to stop performing AI inference.

**In** an embodiment, the AI processing decision includes forwarding the AI inference result to the target node by the node currently performing the inference task, that will be described below.

In the embodiments of the present disclosure, in the case of the cell access operation (e.g., a cell handover scenario, a re-accessing scenario, or some other scenarios) occurring during the process of performing the network task by the terminal with the AI mode, the node currently performing the inference task continues to complete the inference task and forwards information such as the inference result to the terminal.

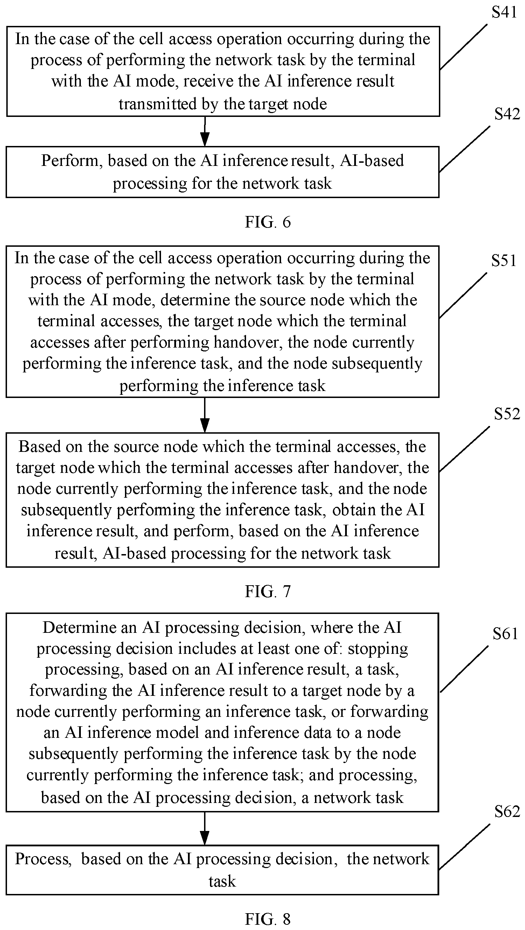

FIG. 6 is a flowchart illustrating a network task processing method based on AI according to still another embodiment of the present disclosure. As shown in FIG. 6, the network task processing method based on AI is performed by a terminal, and includes the following steps S41 to S42.

At step S41, in the case of the cell access operation (e.g., a cell handover scenario, a re-accessing scenario, or some other scenarios) occurring during the process of performing the network task by the terminal with the AI mode, the AI inference result transmitted by the target node is received.

At step S42, AI-based processing for the network task is performed based on the AI inference result.

In an embodiment, the AI processing decision includes forwarding an AI inference model and inference data to a node subsequently performing the inference task by the node currently performing the inference task, that will be described below.

In the embodiments of the present disclosure, in the case of the cell access operation (e.g., a cell handover scenario, a re-accessing scenario, or some other scenarios) occurring during the process of performing the network task by the terminal with the AI mode, the node currently performing the inference task forwards the AI model, the inference data, etc., for performing the inference task to the node subsequently performing the inference task, and the node subsequently performing the inference task performs the inference task, and transmit the inference result to the terminal.

In 5G dependent network, both the gNB and the eNB can provide wireless connection for the terminal. When the terminal moves, the terminal will perform handover between different base stations according to the wireless signal coverage and other conditions. Depending on the source node accessed by the terminal, the target node accessed by the terminal after performing the handover, and the node performing the inference task, the implementation process involved in the delivery of the AI task (determination of the AI processing decision) will be different.

The node responsible for subsequently performing the inference task may be a terminal, a gNB-CU, a gNB-DU, and other nodes with an AI inference capability. The terminal may select the terminal, the gNB-CU, or the gNB-DU to perform the inference task, or select multiple nodes to jointly perform the inference task. Subsequently, when the terminal obtains the AI inference result, the AI inference result can be obtained based on the source node accessed by the terminal, the target node accessed by the terminal after performing the handover, the node currently performing the inference task, and the node subsequently performing the inference task.

FIG. 7 is a flowchart illustrating a network task processing method based on AI according to still another embodiment of the present disclosure. As shown in FIG. 7, the network task processing method based on AI is performed by a terminal, and includes the following steps S51 to S52.

At step S51, in the case of the cell access operation (e.g., a cell handover scenario, a re-accessing scenario, or some other scenarios) occurring during the process of performing the network task by the terminal with the AI mode, the source node which the terminal accesses, the target node which the terminal accesses after performing handover, the node currently performing the inference task, and the node subsequently performing the inference task are determined.

At step S52, based on the source node which the terminal accesses, the target node which the terminal accesses after handover, the node currently performing the inference task, and the node subsequently performing the inference task, the AI inference result is obtained, and AI-based processing for the network task is performed based on the AI inference result.

In an embodiment of the present disclosure, the AI processing decision includes forwarding the AI inference model, the inference data, etc. to the node subsequently performing the inference task by the node currently performing the inference task, and the terminal obtains the AI inference results based on the source node which the terminal accesses, the target node which the terminal accesses after handover, the node currently performing the inference task, and the node subsequently performing the inference task, such that the continuity and accuracy of obtaining the AI inference result by the terminal is ensured.

In the embodiments of the present disclosure, with respect to different handover scenarios of the terminal and different nodes performing the inference task, a mode of adapting to a handover scenario may be selected to determine a mode in which the terminal can obtain the AI inference result. For example, in the embodiments of the present disclosure, based on the source node which the terminal accesses, the target node which the terminal accesses after handover, the node currently performing the inference task, and the node subsequently performing the inference task, obtaining the AI inference result may include one or more of the following modes.

Mode 1: the source node is a first gNB, the target node is a second gNB, or a gNB-DU under a same gNB-CU as the first gNB, the node currently performing the inference task is a gNB, and the node subsequently performing the inference task is a gNB-CU or a gNB-DU. the node subsequently performing the inference task can transmit the AI inference result to the terminal, and the terminal can receive the AI inference result transmitted by the node subsequently performing the inference task.

In an example, the terminal accesses the gNB, and the inference task is performed by the gNB-CU. The terminal hands over from the source gNB-DU to the target gNB-DU under the same gNB-CU, and the terminal may reselect the gNB-CU, or the gNB-DU as the node subsequently performing the inference task. If the reselected node subsequently performing the inference task is the gNB-CU, the gNB-CU may continue to perform the inference task based on the AI model and the inference data to obtain the AI inference result, and transmit the AI inference result to the terminal, and the terminal obtains the AI inference result transmitted by the gNB-CU. If the reselected node subsequently performing the inference task is the gNB-DU, the gNB-CU may forward the AI model and the inference data to the gNB-DU performing the inference task, and the gNB-DU may perform the inference task based on the AI model and the inference data to obtain the AI inference result, and transmit the AI inference result to the terminal. The terminal receives the AI inference result transmitted by the gNB-DU.

Mode 2: the source node is the first gNB, the target node is the second gNB, or a gNB-DU under a same gNB-CU as the first gNB, the node currently performing the inference task is the terminal and the gNB-CU, or the terminal and the gNB-DU, and the node subsequently performing the inference task is the gNB-CU, or the gNB-DU. The terminal needs to transmit a first part of the inference model to the node subsequently performing the inference task, and receive the AI inference result transmitted by the node subsequently performing the inference task.

In an example, the terminal accesses the gNB, and the inference task is jointly performed by the terminal and the gNB-CU. The terminal hands over from the source gNB-DU to the target gNB-DU under the same gNB-CU, or the terminal hands over from the source gNB to the target gNB. The terminal reselects the node subsequently performing the inference task. If the reselected node subsequently performing the inference task is the target gNB-CU, the terminal transmits a first half of the inference model (the first part of the inference model) to the target gNB-CU, and the source gNB-CU transmits a second half of the inference model (the second part of the inference model) to the target gNB-CU. The target gNB-CU performs the inference task based on the first part of the inference model and the second part of the inference model to obtain the AI inference result, and transmits the AI inference result to the terminal. The terminal receives the AI inference result obtained by performing the inference task by the gNB-CU based on the first part of the inference model and the second part of the inference model. If the reselected node subsequently performing the inference task is the target gNB-DU, the terminal transmits a first half of the inference model (the first part of the inference model) to the target gNB-DU, and the source gNB-CU transmits a second half of the inference model (the second part of the inference model) to the target gNB-DU. The target gNB-DU performs the inference task based on the first part of the inference model and the second part of the inference model to obtain the AI inference result, and transmits the AI inference result to the terminal. The terminal receives the AI inference result obtained by performing the inference task by the gNB-DU based on the first part of the inference model and the second part of the inference model.

Mode 3: the source node is the first gNB, the target node is the second gNB, or the gNB-DU under the same gNB-CU as the first gNB, or the eNB, and the node currently performing the inference task is the gNB, or the terminal and the gNB-CU, or the terminal and the gNB-DU, and the node subsequently performing the inference task is the terminal. The terminal may receive the inference model transmitted by the node currently performing the inference task and determine the AI inference result based on the inference model.

In an example, the terminal accesses the gNB, and the inference task is jointly performed by the terminal and the source gNB-DU. The terminal hands over from the source gNB-DU to the target gNB-DU under the same gNB-CU, or the terminal hands over to the target gNB, or the terminal hands over to the target eNB. The terminal reselects the terminal as the node subsequently performing the inference task. The source gNB-DU transmits the inference model required for performing the AI inference task to the terminal, and the terminal receives the inference model transmitted by the source gNB-DU and determines the AI inference result based on the inference model.

Mode 4: the source node is the first gNB, the target node is the second gNB, or the gNB-DU under the same gNB-CU as the first gNB, the node currently performing the inference task is the gNB, or the terminal and the gNB-CU, or the terminal and the gNB-DU, and the node subsequently performing the inference task is the terminal and the gNB-CU, or the terminal and the gNB-DU. The terminal receives the AI inference result corresponding to the second part of the inference model transmitted by the gNB-CU or the gNB-DU.

In an example, the terminal accesses the gNB, and the inference task is jointly performed by the terminal and the gNB-DU. The terminal hands over from the source gNB-DU to the target gNB-DU under the same gNB-CU, or the terminal hands over from the source gNB to the target gNB. The terminal reselects the node subsequently performing the inference task. If the reselected node subsequently performing the inference task is the terminal and the gNB-CU. The source gNB-DU transmits the second half of the inference model (the second part of the inference model) to the target gNB-CU, and the target gNB-CU performs the inference task based on the second part of the inference model and obtains the AI inference result corresponding to the second part of the inference model, and transmits the AI inference result corresponding to the second part of the inference model to the terminal. The terminal receives the AI inference result corresponding to the second part of the inference model transmitted by the gNB-CU. If the reselected node subsequently performing the inference task is the terminal and the gNB-DU. The source gNB-DU transmits the second half of the inference model (the second part of the inference model) to the target gNB-DU, and the target gNB-DU performs the inference task based on the second part of the inference model and obtains the AI inference result corresponding to the second part of the inference model, and transmits the AI inference result corresponding to the second part of the inference model to the terminal. The terminal receives the AI inference result corresponding to the second part of the inference model transmitted by the gNB-DU. It is to be understood that the terminal may continue to perform the inference task based on the conventional inference model and the inference data, and obtain the corresponding AI inference result. Through the present disclosure, the terminal and the target gNB-CU, or the terminal and the target gNB-DU can jointly perform the inference task.

Mode 4: the source node is the first gNB, the target node is the eNB, the node currently performing the inference task is the gNB, or the terminal and the gNB-CU, or the terminal and the gNB-DU, and the node subsequently performing the inference task is a third gNB deployed by operation administration and maintenance (OAM). The terminal receives the AI inference result transmitted by the third gNB.

In an example, the terminal accesses the gNB, and the inference task is performed by the gNB, or the terminal and the gNB-CU, or the terminal and the gNB-DU. The terminal hands over to a target eNB. The terminal reselects the node subsequently performing the inference task. If the terminal reselects the gNB as the node subsequently performing the inference task. The OAM deploys the inference model in the reselected gNB, and the reselected gNB performs the inference task and transmits the AI inference result to the terminal. The terminal receives the AI inference result transmitted by the gNB with the inference model deployed by OAM.

Mode 5: the source node is the eNB, the target node is the gNB, the node currently performing the inference task is the gNB, the node subsequently performing the inference task is the gNB deployed by the OAM, or the terminal and the gNB-CU, or the terminal and the gNB-DU, and the AI inference result transmitted by the node subsequently performing the inference task is received.

In an example, the terminal accesses the eNB, and the inference task is performed by the gNB. The terminal hands over from the eNB to the target gNB. The terminal reselects the node subsequently performing the inference task. the node subsequently performing the inference task may be the gNB, or the terminal and the gNB-CU, or the terminal and the gNB-DU. The OAM deploys the inference model in the reselected gNB, gNB-CU or gNB-DU. The reselected gNB, gNB-CU, or gNB-DU performs the inference task and transmits the AI inference results to the terminal. The terminal receives the AI inference results transmitted by the reselected gNB, gNB-CU or gNB-DU.

Mode 6: the source node is the eNB, the target node is the eNB, the node currently performing the inference task is the gNB, and the node subsequently performing the inference task is the gNB deployed by the OAM. The terminal receives the AI inference result transmitted by the target eNB.

In an example, the terminal accesses the eNB, and the inference task is performed by the gNB. The terminal hands over from the eNB to the target eNB. The terminal reselects the node subsequently performing the inference task. the node subsequently performing the inference task may be the gNB. The OAM deploys the inference model to the reselected gNB. The reselected gNB performs the inference task and transmits the AI inference result to the terminal. The terminal receives the AI inference result transmitted by the reselected gNB.

Further, in the embodiments of the present disclosure, when the node currently performing the inference task is the terminal, the terminal can still continue to perform the inference task and obtain the AI inference result if the cell access operation occurs during a process of performing the inference task by the terminal.

It is to be understood that the network task processing method based on AI provided by the embodiments of the present disclosure, in response to the multiple handover situations of the terminal under the 5G non-independent networking architecture, designs a targeted mobility management scheme for the AI computing power of each network node, and ensures network load balancing while providing intelligent analysis results for the terminal. Further, when the terminal performs the handover, the terminal can stop the AI-based processing for the network task to fall back to the conventional decision processing mode, or may forward the inference results, or may also forward the inference model and the inference data. The communication overhead and computation overhead required by different AI processing decisions are different, which can be flexibly selected according to the load of terminals and network devices to achieve the balance between overhead and performance.

Further, in the embodiments of the present disclosure, the present scheme, based on the source node, the target node, the node currently performing the inference task, and the node subsequently responsible for performing the inference task, can adopt a variety of different inference modes to provide the terminal with the AI inference results, thereby effectively improving the utilization rate of the arithmetic power at the edge of the network, and avoiding large-scale inference data transmission. Moreover, based on the accessed source node and the node currently performing the inference task, different mobility management schemes can be provided to ensure that the terminal can realize the smooth delivery of the AI inference tasks in various scenarios of performing the AI tasks.

Based on the same conception, embodiments of the present disclosure also provide a network task processing method based on AI, which is performed by a network device.

FIG. 8 is a flowchart illustrating a network task processing method based on AI according to still another embodiment of the present disclosure. As shown in FIG. 8, the network task processing method based on AI is performed by a network device, and includes the following steps S61 to S62.

At step S61, an AI processing decision is determined, where the AI processing decision includes at least one of stopping processing, based on an AI inference result, a task, forwarding the AI inference result to a target node by a node currently performing an inference task, or forwarding an AI inference model and inference data to a node subsequently performing the inference task by the node currently performing the inference task; and processing, based on the AI processing decision, a network task.

At step S62, the network task is processed based on the AI processing decision.

In the embodiments of the present disclosure, the network device determines the AI processing decision so that the terminal can select an applicable AI processing decision in the case of the cell access operation occurring during the process of performing the network task by the terminal with the AI mode.

In the embodiments of the present disclosure, the network device can determine the AI processing decision based on the decision-related information reported by the terminal.

In the embodiments of the present disclosure, on the one hand, the AI processing decision may be determined by the terminal based on any one of a usage scenario, a requirement, and a communication standard; on the other hand, the AI processing decision may also be determined by the network device and transmitted to the terminal by the network device, and the terminal receives the AI processing decision transmitted by the network device. The network device may be determined based on any one of: a usage scenario, a requirement, and a communication standard. On the further hand, the AI processing decision may also be determined by each of the network device and the terminal according to the same guideline.

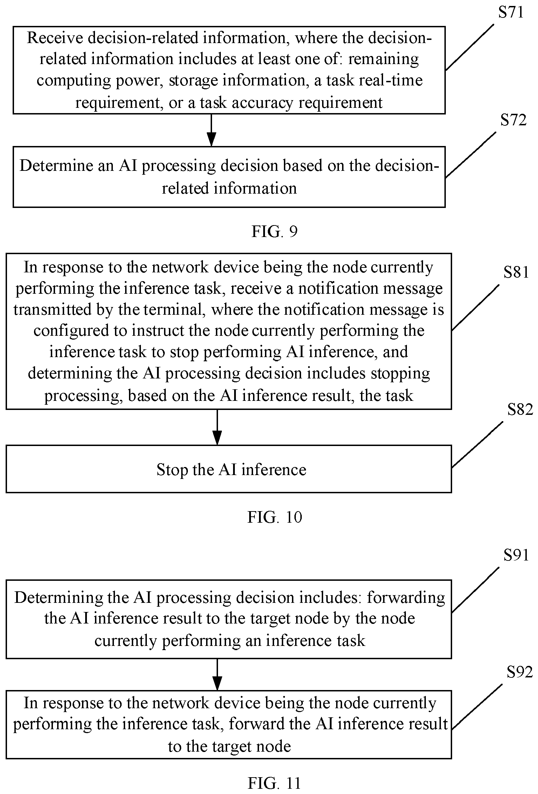

FIG. 9 is a flowchart illustrating a network task processing method based on AI according to still another embodiment of the present disclosure. As shown in FIG. 9, the network task processing method based on AI is performed by a network device, and includes the following steps S71 to S72.

At step 71, decision-related information is received, where the decision-related information includes at least one of remaining computing power, storage information, a task real-time requirement, or a task accuracy requirement.

At step S72, an AI processing decision is determined based on the decision-related information.

In the embodiments of the present disclosure, the network device determines the AI processing decision, and may transmit the determined AI processing decision to the terminal so that the terminal selects the applicable AI processing decision.

In an embodiment, the AI processing decision includes stopping processing. If the network device is the node currently performing the inference task, a notification message transmitted by the terminal is received to stop performing the AI inference.

FIG. 10 is a flowchart illustrating a network task processing method based on AI according to still another embodiment of the present disclosure. As shown in FIG. 10, the network task processing method based on AI is performed by a network device, and includes the following steps S81 to S82.

At step S81, in response to the network device being the node currently performing the inference task, a notification message transmitted by the terminal is received, where the notification message is configured to instruct the node currently performing the inference task to stop performing AI inference, and determining the AI processing decision includes stopping processing, based on the AI inference result, the task.

At step S82, the AI inference is stopped.

In an embodiment, the AI processing decision includes forwarding the AI inference result to the target node by the node currently performing the inference task, and when the network device is the node currently performing the inference task, the AI inference result is forwarded to the target node.

FIG. 11 is a flowchart illustrating a network task processing method based on AI according to still another embodiment of the present disclosure. As shown in FIG. 11, the network task processing method based on AI is performed by a network device, and includes the following steps S91 to S92.

At step S91, determining the AI processing decision includes: forwarding the AI inference result to the target node by the node currently performing an inference task.

At step S92, in response to the network device being the node currently performing the inference task, the AI inference result is forwarded to the target node.

In another embodiment, the AI processing decision includes forwarding the AI inference result to the target node by the node currently performing the inference task. If the network device is a target node which the terminal accesses after performing the handover, the network device receives the AI inference result forwarded by the node currently performing the inference task and transmits the AI inference result to the terminal.

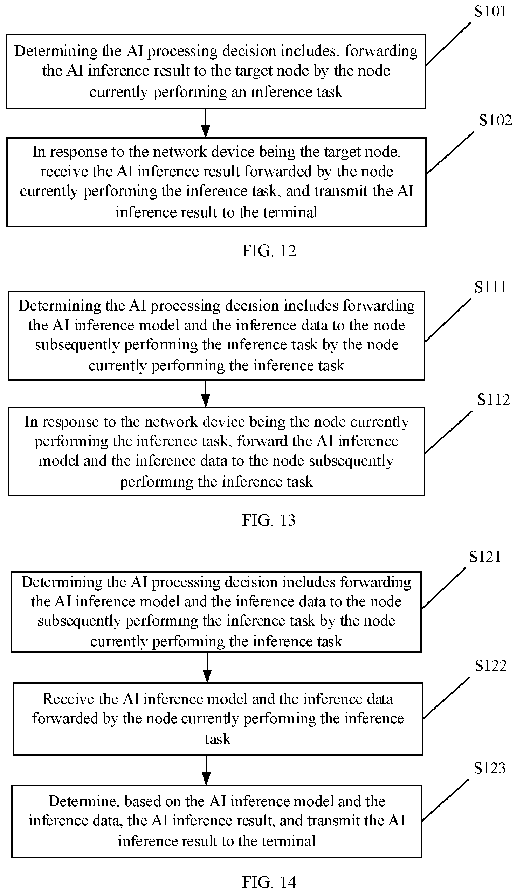

FIG**.** 12 is a flowchart illustrating a network task processing method based on AI according to still another embodiment of the present disclosure. As shown in FIG. 12, the network task processing method based on AI is performed by a network device, and includes the following steps S101 to S102.

At step S101, determining the AI processing decision includes: forwarding the AI inference result to the target node by the node currently performing an inference task.

At step S102, in response to the network device being the target node, the AI inference result forwarded by the node currently performing the inference task is received, and the AI inference result is transmitted to the terminal.

In an embodiment, the AI processing decision includes forwarding the AI inference model and the inference data to the node subsequently performing the inference task by the node currently performing the inference task. If the network device is the node currently performing the inference task, the network device can forward the AI inference model and the inference data to the node subsequently performing the inference task.

FIG. 13 is a flowchart illustrating a network task processing method based on AI according to still another embodiment of the present disclosure. As shown in FIG. 13, the network task processing method based on AI is performed by a network device, and includes the following steps S111 to S112.

At step S111, determining the AI processing decision includes forwarding the AI inference model and the inference data to the node subsequently performing the inference task by the node currently performing the inference task.

At step S112, in response to the network device being the node currently performing the inference task, the AI inference model and the inference data are forwarded to the node subsequently performing the inference task.

In another embodiment, the AI processing decision includes forwarding the AI inference model and the inference data to the node subsequently performing the inference task by the node currently performing the inference task. If the network device is the node subsequently performing the inference task, it receives the AI inference model and the inference data forwarded by the node currently performing the inference task, and determines the AI inference result based on the AI inference model and the inference data.

FIG. 14 is a flowchart illustrating a network task processing method based on AI according to still another embodiment of the present disclosure. As shown in FIG. 14, the network task processing method based on AI is performed by a network device, and includes the following steps S121 to S123.

At step S121, determining the AI processing decision includes forwarding the AI inference model and the inference data to the node subsequently performing the inference task by the node currently performing the inference task.

At step S122, the AI inference model and the inference data forwarded by the node currently performing the inference task is received.

At step S123, the AI inference result is determined based on the AI inference model and the inference data, and the AI inference result is transmitted to the terminal.

According to the network task processing method based on AI provided by the embodiments of the present disclosure, the network device determines the AI processing decision, which can solve the problem of providing the corresponding AI processing decision when the cell access operation occurs in a scenario where the terminal is moving at high speed, and ensure the smooth implementation of network task processing in the AI mode.

It is to be understood that the network task processing method based on AI provided by the embodiments of the present disclosure can be applied to the process of realizing network task processing by interaction between the terminal and the network device. For the process of realizing network task processing by interaction between the terminal and the network device, the terminal and the network device have functions related to realizing the above embodiments.

According to the network task processing method based on AI provided by the embodiments of the present disclosure, different AI processing decisions can be selected in different handover scenarios according to different inference modes in which network device provides the AI inference result for the terminal. The inference mode may characterize the source node accessed by the terminal, and the node currently performing the inference task. For example, the inference mode involved in the embodiments of the present disclosure may include the following modes (1) to (7). (1) The terminal accesses the gNB, and the inference task is performed by the gNB-CU. (2) The terminal accesses the gNB, and the inference task is performed by the gNB-DU. (3) The terminal accesses the gNB, and the inference task is jointly performed by the terminal and the gNB-CU. (4) The terminal accesses the gNB, and the inference task is jointly performed by the terminal and the gNB-DU. (5) The terminal accesses the eNB, and the inference task is performed by the gNB. (6) The terminal accesses the gNB, and the inference task is performed by the terminal. (7) The terminal accesses the eNB, and the inference task is performed by the terminal.

In the embodiments of the present disclosure, for different inference modes, the terminal can select the corresponding AI processing decisions according to the different handover scenarios. The different inference modes are explained below.

For the convenience of description, the solution in which the AI processing decision includes stopping processing, based on the AI inference result, the task is referred to as a fallback conventional solution. The solution in which the AI processing decision includes forwarding the AI inference result to the target node by the node currently performing the inference task is referred to as inference result forwarding. The solution in which the AI processing decision includes forwarding the AI inference model and the inference data to the node subsequently performing the inference task by the node currently performing the inference task is inference model and data forwarding.

Mode (1): the terminal accesses the gNB, and the inference task is performed by the gNB-CU.
① The terminal hands over from the source gNB-DU to the target gNB-DU under the same gNB-CU, and the AI processing decision adopted may include solutions a) to c).
   a) The fallback conventional solution: the terminal adopts conventional methods for analysis or decision.
   b) The inference result forwarding: the source gNB-CU forwards the inference result to the target gNB-DU which the terminal accesses after the inference is completed, and the target gNB-DU transmits the inference result to the terminal.
   c) The inference model and data forwarding: if the inference mode (1), (2), (3), (4), or (6) is reselected, the gNB-CU transmits the inference model to the terminal or the target gNB-DU.
② The terminal hands over from the source gNB to the target gNB, and the AI processing decision adopted may include solutions a) to c).
   a) The fallback conventional solution: the terminal adopts conventional methods for analysis or decision.
   b) The inference result forwarding: the source gNB transmits the inference result to the target gNB after the inference is completed, and the target gNB transmits the inference result to the terminal.
   c) The inference model and data forwarding: if the inference mode (1), (2), (3), (4), or (6) is reselected, the source gNB transmits the inference model to the terminal, the target gNB-CU or the target gNB-DU.
③ The terminal hands over from the source gNB to the target eNB, and the AI processing decision adopted may include solutions a) to c).
   a) The fallback conventional solution: the terminal adopts conventional methods for analysis or decision.
   b) The inference result forwarding: the source gNB transmits the inference result to the target eNB after the inference is completed, and the target eNB transmits the inference result to the terminal.
   c) The inference model and data forwarding: if the inference mode (5) is reselected, the OAM deploys the inference model to the gNB responsible for inference; if the inference mode (7) is selected, the source gNB transmits the the inference model to the terminal.

Mode (2): the terminal accesses the gNB, and the inference task is performed by the gNB-DU.
① The terminal hands over from the source gNB-DU to the target gNB-DU under the same gNB-CU, and the AI processing decision adopted may include solutions a) to c).
   a) The fallback conventional solution: the terminal adopts conventional methods for analysis or decision.
   b) The inference result forwarding: the source gNB-DU transmits the inference result to the target gNB-DU after the inference is completed, and the target gNB-DU transmits the inference result to the terminal.
   c) The inference model and data forwarding: if the inference mode (1), (2), (3), (4), or (6) is reselected, the source gNB-DU transmits the inference model to the terminal, the gNB-CU or the target gNB-DU.
② The terminal hands over from the source gNB to the target gNB, and the AI processing decision adopted may include solutions a) to c).
   a) The fallback conventional solution: the terminal adopts conventional methods for analysis or decision.
   b) The inference result forwarding: the source gNB transmits the inference result to the target gNB after the inference is completed, and the target gNB transmits the inference result to the terminal.
   c) The inference model and data forwarding: if the inference mode (1), (2), (3), (4), or (6) is reselected, the source gNB will transmit the inference model to the terminal, the target gNB-CU or the target gNB-DU.
③ The terminal hands over from the source gNB to the target eNB, and the AI processing decision adopted may include solutions a) to c).
   a) The fallback conventional solution: the terminal adopts conventional methods for analysis or decision.
   b) The inference result forwarding: the source gNB transmits the inference result to the target eNB after the inference is completed, and the target eNB transmits the inference result to the terminal.
   c) The inference model and data forwarding: if the inference mode (5) is reselected, the OAM deploys the inference model to the gNB responsible for inference; if the inference mode (7) is selected, the source gNB transmits the the inference model to the terminal.

Mode (3): the terminal accesses the gNB, and the inference task is jointly performed by the terminal and the gNB-CU.
① The terminal hands over from the source gNB-DU to the target gNB-DU under the same gNB-CU, and the AI processing decision adopted may include solutions a) to c).
   a) The fallback conventional solution: the terminal adopts conventional methods for analysis or decision.
   b) The inference result forwarding: the gNB-CU transmits the inference result to the target gNB-DU after the inference is completed, and the target gNB-DU transmits the inference result to the terminal.
   c) The inference model and data forwarding: if the inference mode (1) is reselected, the terminal transmits the first half of the inference model to the gNB-CU; if the inference mode (2) is reselected, the terminal transmits the first half of the inference model to the target gNB-DU, and the gNB-CU transmits the second half of the inference model to the target gNB-DU; if the inference mode (4) is reselected, the gNB-CU transmits the second half of the the inference model to the target gNB-DU; if the inference mode (6) is reselected, the gNB-CU transmits the second half of the the inference model to the terminal.
② The terminal hands over from the source gNB to the target gNB, and the AI processing decision adopted may include solutions a) to c).
   a) The fallback conventional solution: the terminal adopts conventional methods for analysis or decision.
   b) The inference result forwarding: the source gNB transmits the inference result to the target gNB after the inference is completed, and the target gNB transmits the inference result to the terminal.
   c) The inference model and data forwarding: if the inference mode (1) is reselected, the terminal transmits the first half of the inference model to the target gNB-CU, and the source gNB-CU transmits the second half of the inference model to the target gNB-CU; if the inference mode (2) is reselected, the terminal transmits the first half of the inference model to the target gNB-DU, and the source gNB-CU transmits the second half of the inference model to the target gNB-DU; if the inference mode (3) is reselected, the source gNB-CU transmits the second half of the the inference model to the target gNB-CU; if the inference mode (4) is reselected, the source gNB-CU transmits the second half of the inference model to the target gNB-DU; if the inference mode (6) is reselected, the gNB-CU transmits the second half of the inference model to the terminal.
③ The terminal hands over from the source gNB to the target eNB, and the AI processing decision adopted may include solutions a) to c).
   a) The fallback conventional solution: the terminal adopts conventional methods for analysis or decision.
   b) The inference result forwarding: the source gNB transmits the inference result to the target eNB after the inference is completed, and the target eNB transmits the inference result to the terminal.
   c) The inference model and data forwarding: if the inference mode (5) is reselected, the OAM deploys the inference model to the gNB responsible for inference; if the inference mode (7) is selected, the source gNB-CU transmits the second half of the inference model to the terminal.

Mode (4): the terminal accesses the gNB, and the inference task is jointly performed by the terminal and the gNB-DU.
① The terminal hands over from the source gNB-DU to the target gNB-DU under the same gNB-CU, and the AI processing decision adopted may include solutions a) to c).
   a) The fallback conventional solution: the terminal adopts conventional methods for analysis or decision.
   b) The inference result forwarding: the source gNB-DU transmits the inference result to the target gNB-DU after the inference is completed, and the target gNB-DU transmits the inference result to the terminal.
   c) The inference model and data forwarding: if the inference mode (1) is reselected, the terminal transmits the first half of the inference model to the gNB-CU, and the source gNB-DU transmits the second half of the inference model to the gNB-CU; if the inference mode (2) is reselected, the terminal transmits the first half of the inference model to the target gNB-DU, and the source gNB-DU transmits the second half of the inference model to the target gNB-DU; if the inference mode (4) is reselected, the source gNB-DU transmits the second half of the the inference model to the target gNB-DU; if the inference mode (6) is reselected, the source gNB-DU transmits the second half of the the inference model to the terminal.
② The terminal hands over from the source gNB to the target gNB, and the AI processing decision adopted may include solutions a) to c).
   a) The fallback conventional solution: the terminal adopts conventional methods for analysis or decision.
   b) The inference result forwarding: the source gNB transmits the inference result to the target gNB after the inference is completed, and the target gNB transmits the inference result to the terminal.
   c) The inference model and data forwarding: if the inference mode (1) is reselected, the terminal transmits the first half of the inference model to the target gNB-CU, and the source gNB-DU transmits the second half of the inference model to the target gNB-CU; if the inference mode (2) is reselected, the terminal transmits the first half of the inference model to the target gNB-DU, and the source gNB-DU transmits the second half of the inference model to the target gNB-DU; if the inference mode (3) is reselected, the source gNB-DU transmits the second half of the the inference model to the target gNB-CU; if the inference mode (4) is reselected, the source gNB-DU transmits the second half of the the inference model to the target gNB-CU; if the inference mode (6) is reselected, the source gNB-DU transmits the second half of the the inference model to the terminal.
③ The terminal hands over from the source gNB to the target eNB, and the AI processing decision adopted may include solutions a) to c).
   a) The fallback conventional solution: the terminal adopts conventional methods for analysis or decision.
   b) The inference result forwarding: the source gNB transmits the inference result to the target eNB after the inference is completed, and the target eNB transmits the inference result to the terminal.
   c) The inference model and data forwarding: if the inference mode (5) is reselected, the OAM deploys the inference model to the gNB responsible for inference; if the inference mode (7) is reselected, the source gNB-DU transmits the second half of the the inference model to the terminal.

Mode (5): the terminal accesses the eNB, and the inference task is performed by the gNB.
① The terminal hands over from the source eNB to the target gNB, and the AI processing decision adopted may include solutions a) to c).
   a) The fallback conventional solution: the terminal adopts conventional methods for analysis or decision.
   b) The inference result forwarding: the gNB responsible for inference transmits the inference result to the source eNB after the inference is completed, the source eNB forwards the inference result to the target gNB, and the target gNB transmits the inference result to the terminal.
   c) The inference model and data forwarding: if the inference mode (1), (2), (3), (4), or (6) is reselected, the OAM deploys the inference model to the node responsible for inference.
② The terminal hands over from the source eNB to the target eNB, and the AI processing decision adopted may include solutions a) to c).
   a) The fallback conventional solution: the terminal adopts conventional methods for analysis or decision.
   b) The inference result forwarding: the gNB responsible for inference transmits the inference result to the source eNB after the inference is completed, the source eNB forwards the inference result to the target eNB, and the target eNB transmits the inference result to the terminal.
   c) The inference model and data forwarding: if the inference mode (5) or (7) is reselected, the OAM deploys the inference model to the node responsible for inference.

Mode (6): the terminal accesses the gNB, and the inference task is performed by the terminal.

Mode (7): the terminal accesses the eNB, and the inference task is performed by the terminal.

Based on the AI processing decisions involved in the above-mentioned inference modes, the terminal can flexibly select an AI processing decision based on the actual load situation.

For example, the inference mode (1) is illustrated as an example.

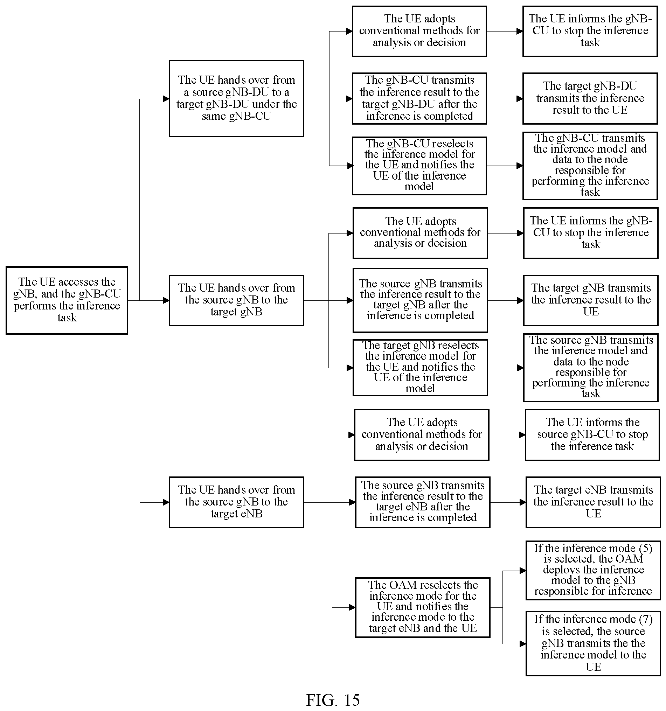

FIG. 15 is a flowchart illustrating a network task processing method based on AI according to an embodiment of the present disclosure. Referring to FIG. 15, the inference mode (1) is used to provide the inference result to the terminal, when a UE accesses the gNB, and the gNB-CU performs the inference task and provides the inference result, if a movement of the UE causes handover, a corresponding AI processing decision may be selected based on the target node to which the terminal hands over.
(1) If the UE hands over from a source gNB-DU to a target gNB-DU under the same gNB-CU, one of the following three solutions a), b) and c) can be selected.
   a) If the fallback conventional solution is selected, the UE adopts conventional methods for analysis or decision. The UE informs the gNB-CU to stop the inference task.
   b) If the inference result forwarding is selected, the gNB-CU transmits the inference result to the target gNB-DU after the inference is completed, and the target gNB-DU transmits the inference result to the UE.
   c) If the inference model and data forwarding is selected, the gNB-CU reselects the inference model for the UE and notifies the UE of the inference model. The gNB-CU transmits the inference model and data to the node responsible for performing the inference task.
(2) If the UE hands over from the source gNB to the target gNB, one of the following three solutions a), b) and c) can be selected.
   a) If the fallback conventional solution is selected, the UE adopts conventional methods for analysis or decision. The UE informs the gNB-CU to stop the inference task.
   b) If the inference result forwarding is selected, the source gNB transmits the inference result to the target gNB after the inference is completed. The target gNB transmits the inference result to the UE.
   c) If the inference model and data forwarding is selected, the target gNB reselects the inference model for the UE and notifies the UE of the inference model. The source gNB transmits the inference model and data to the node responsible for performing the inference task.
(3) If the UE hands over from the source gNB to the target eNB, one of the following three solutions a), b) and c) can be selected.
   a) If the fallback conventional solution is selected, the UE adopts conventional methods for analysis or decision. The UE informs the source gNB-CU to stop the inference task.
   b) If the inference result forwarding is selected, the source gNB transmits the inference result to the target eNB after the inference is completed. The target eNB transmits the inference result to the UE.
   c) If the inference model and data forwarding is selected, the OAM reselects the inference mode for the UE and notifies the inference mode to the target eNB and the UE. If the inference mode (5) is selected, the OAM deploys the inference model to the gNB responsible for inference. if the inference mode (7) is selected, the source gNB transmits the the inference model to the UE.

The network task processing method based on AI provided by the embodiments of the present disclosure provides a method of mobility management in a user mobility scenario in a wireless network architecture based on AI, which solves the problem that the AI inference task of the wireless network, and the inference result cannot be delivered efficiently in the case of a user high-speed mobility scenario. Also, for multiple different inference modes, and multiple different scenarios for the user handover, multiple solutions are provided, and the user can choose different solutions according to the specific scenarios and the needs of the user, such that the service experience of the user is ensured while the load balancing of the network nodes is realized.

It will be understood by those skilled in the art that the various embodiments or implementations involved in the embodiments of the present disclosure may be used in conjunction with the foregoing embodiments or independently. Whether used independently or in conjunction with the foregoing embodiments, the principle of realization is similar. In the implementation of the present disclosure, some embodiments are described as embodiments used together. Of course, those skilled in the art can understand that such illustration is not a limitation of the embodiments of the present disclosure.

Based on the same conception, the embodiments of the present disclosure also provide a network task processing apparatus based on AI.

It will be understood that in order to realize the foregoing functions, the network task processing apparatus based on AI provided by the embodiments of the present disclosure includes corresponding hardware structures and/or software modules for performing various functions. Combining the units and algorithm steps of various examples disclosed in the embodiments of the present disclosure, the embodiments of the present disclosure can be realized in the form of hardware or a combination of hardware and computer software. Whether a function is performed as hardware or computer software driving hardware depends on the particular application and design constraints of the technical solution. Those skilled in the art can use different methods to realize the described functions for each specific application, but this realization should not be considered beyond the scope of the technical solutions of the embodiments of the present disclosure.

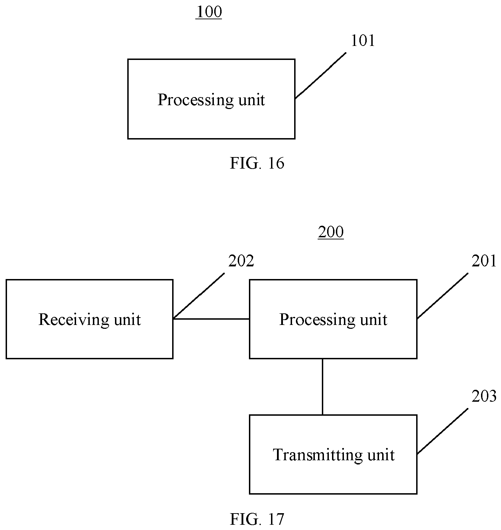

FIG. 16 is a block diagram illustrating a network task processing apparatus based on AI according to an embodiment of the present disclosure. Referring to FIG. 16, the network task processing apparatus 100 based on AI may be applied to the terminal involved in the foregoing embodiments, and include a processing unit 101.

The processing unit 101 is configured to determine an AI processing decision in response to a cell access operation occurring during a process of performing, with an AI mode, a network task by the terminal, and process, based on the AI processing decision, the network task, where the AI processing decision includes at least one of: stopping processing, based on an AI inference result, a task, forwarding the AI inference result to a target node by a node currently performing an inference task, or forwarding an AI inference model and inference data to a node subsequently performing the inference task by the node currently performing the inference task.

In an embodiment, the processing unit 101 is configured to: transmit decision-related information to a network device, where the decision-related information includes at least one of: remaining computing power, storage information, a task real-time requirement, or a task accuracy requirement; and receive the AI processing decision transmitted by the network device, where the AI processing decision is determined by the network device based on the decision-related information. The processing unit determines the AI processing decision received by the receiving unit as an AI processing decision.

In an embodiment, the AI processing decision includes stopping processing, based on the AI inference result, the task, and the processing unit 101 is configured to stop processing, based on the AI inference result, the task.

In an embodiment, the AI processing decision includes stopping processing, based on the AI inference result, the task, and the processing unit 101 is configured to transmit a notification message to the node currently performing the inference task, where the notification message is configured to instruct the node currently performing the inference task to stop performing AI inference.

In an embodiment, the AI processing decision includes forwarding the AI inference result to the target node by the node currently performing the inference task, and the processing unit 101 is configured to: receive the AI inference result transmitted by the target node, and perform AI-based processing for the network task based on the AI inference result.

In an embodiment, the AI processing decision includes forwarding the AI inference model and the inference data to the node subsequently performing the inference task by the node currently performing the inference task, and the processing unit 101 is configured to: determine a source node which the terminal accesses, the target node which the terminal accesses after performing handover, the node currently performing the inference task, and the node subsequently performing the inference task; and obtain, based on the source node which the terminal accesses, the target node which the terminal accesses after performing the handover, the node currently performing the inference task, and the node subsequently performing the inference task, the AI inference result, and perform AI-based processing for the network task based on the AI inference result.

In an embodiment, in response to the source node being a first next generation node B (gNB), the target node being a second gNB, or a next generation node B distributed unit (gNB-DU) under a same next generation node B control unit (gNB-CU) as the first gNB, the node currently performing the inference task being a gNB, and the node subsequently performing the inference task being a gNB-CU or a gNB-DU, the processing unit 101 is configured to receive the AI inference result transmitted by the node subsequently performing the inference task.

In an embodiment, in response to the source node being the first gNB, the target node being the second gNB, or the gNB-DU under the same gNB-CU as the first gNB, the node currently performing the inference task being the terminal and the gNB-CU, or the terminal and the gNB-DU, and the node subsequently performing the inference task being the gNB-CU, or the gNB-DU, the processing unit 101 is configured to: transmit a first part of the inference model to the node subsequently performing the inference task, and receive the AI inference result transmitted by the node subsequently performing the inference task.

In an embodiment, in response to the source node being the first gNB, the target node being the second gNB, or the gNB-DU under the same gNB-CU as the first gNB, or an evolved node B (eNB), and the node currently performing the inference task being the gNB, or the terminal and the gNB-CU, or the terminal and the gNB-DU, and the node subsequently performing the inference task being the terminal, the processing unit 101 is configured to: receive the inference model transmitted by the node currently performing the inference task, and determine the AI inference result based on the inference model.

In an embodiment, in response to the source node being the first gNB, the target node being the second gNB, or the gNB-DU under the same gNB-CU as the first gNB, the node currently performing the inference task being the gNB, or the terminal and the gNB-CU, or the terminal and the gNB-DU, and the node subsequently performing the inference task being the terminal and the gNB-CU, or the terminal and the gNB-DU, the processing unit 101 is configured to receive the AI inference result corresponding to a second part of the inference model transmitted by the gNB-CU or the gNB-DU.

In an embodiment, in response to the source node being the first gNB, the target node being the eNB, the node currently performing the inference task being the gNB, or the terminal and the gNB-CU, or the terminal and the gNB-DU, and the node subsequently performing the inference task being a third gNB deployed by operation administration and maintenance (OAM), the processing unit 101 is configured to receive the AI inference result transmitted by the third gNB.

In an embodiment, in response to the source node being the eNB, the target node being the gNB, the node currently performing the inference task being the gNB, and the node subsequently performing the inference task being the gNB deployed by the OAM, or the terminal and the gNB-CU, or the terminal and the gNB-DU, the processing unit 101 is configured to receive the AI inference result transmitted by the node subsequently performing the inference task.

In an embodiment, in response to the source node being the eNB, the target node being the eNB, the node currently performing the inference task being the gNB, and the node subsequently performing the inference task being the gNB deployed by the OAM, the processing unit 101 is configured to receive the AI inference result transmitted by a target eNB.

FIG. 17 is a block diagram illustrating a network task processing apparatus based on AI according to another embodiment of the present disclosure. Referring to FIG. 17, the network task processing apparatus 200 based on AI may be applied to the terminal involved in the foregoing embodiments, and include a processing unit 201.

The processing unit 201 is configured to determine an AI processing decision, and process the network task based on the AI processing decision, where the AI processing decision includes at least one of stopping processing, based on an AI inference result, a task, forwarding the AI inference result to a target node by a node currently performing an inference task, or forwarding an AI inference model and inference data to a node subsequently performing the inference task by the node currently performing the inference task.

In an embodiment, the processing unit 201 is configured to: receive decision-related information, where the decision-related information includes at least one of remaining computing power, storage information, a task real-time requirement, or a task accuracy requirement; and determine, based on the decision-related information, the AI processing decision.

In an embodiment, the network task processing apparatus 200 based on AI further includes a transmitting unit 203, and the transmitting unit 203 is configured to transmit the AI processing decision to the terminal.

In an embodiment, the AI processing decision includes stopping processing, based on the AI inference result, the task. The network task processing apparatus 200 based on AI further includes a receiving unit 202, and the receiving unit 202 is configured to: receive, in response to the network device being the node currently performing the inference task, a notification message transmitted by the terminal, where the notification message is configured to instruct the node currently performing the inference task to stop performing AI inference; and stop performing the AI inference.

In an embodiment, the AI processing decision includes forwarding the AI inference result to the target node by the node currently performing the inference task, and the processing unit 201 is configured to forward, in response to the network device being the node currently performing the inference task, the AI inference result to the target node.

In an embodiment, the AI processing decision includes forwarding the AI inference result to the target node by the node currently performing the inference task, and the processing unit 201 is configured to: receive, in response to the network device being the target node which the terminal accesses after performing handover, the AI inference result forwarded by the node currently performing the inference task, and transmit the AI inference result to the terminal.

In an embodiment, the AI processing decision includes forwarding the AI inference model and the inference data to the node subsequently performing the inference task by the node currently performing the inference task, and the processing unit 201 is configured to: forward, in response to the network device being the node currently performing the inference task, the AI inference model and the inference data to the node subsequently performing the inference task.

In an embodiment, the AI processing decision includes forwarding the AI inference model and the inference data to the node subsequently performing the inference task by the node currently performing the inference task, and the processing unit 201 is configured to: receive, in response to the network device being the node subsequently performing the inference task, the AI inference model and the inference data forwarded by the node currently performing the inference task; and determine, based on the AI inference model and the inference data, the AI inference result, and transmit the AI inference result to the terminal.

Regarding the apparatuses in the above examples, the specific manner in which each module performs operations has been described in detail in the examples of the methods, and will not be described in detail here.

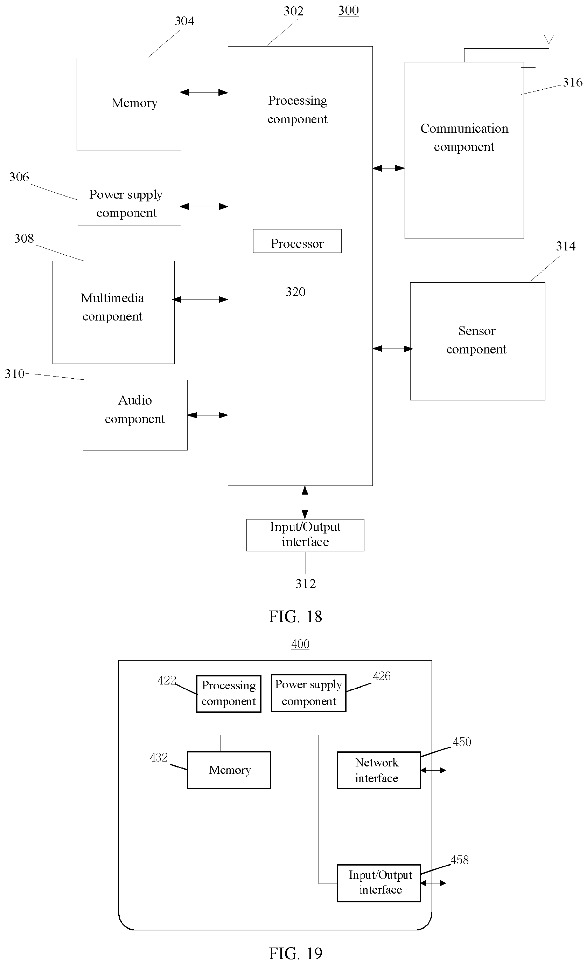

FIG. 18 is a block diagram illustrating a network task processing device 300 based on AI according to another embodiment of the present disclosure. The device 300 may be provided as a terminal. For example, the device 300 can be a mobile phone, a computer, a digital broadcast terminal, a message transmitting and receiving device, a gaming console, a tablet device, a medical device, a fitness device, a personal digital assistant, and the like.

Referring to FIG 18, the device 300 can include one or more of the following components: a processing component 302, a memory 304, a power supply component 306, a multimedia component 308, an audio component 310, an input/output (I/O) interface 312, a sensor component 314, and a communication component 316.

The processing component 302 usually controls overall operations of the device 300, such as operations related to display, a telephone call, data communication, a camera operation and a record operation. The processing component 302 may include one or more processors 320 to execute instructions to complete all or a part of the steps of the above methods. Further, the processing component 302 may include one or more modules to facilitate interaction between the processing component 302 and another component. For example, the processing component 302 may include a multimedia module to facilitate the interaction between the multimedia component 308 and the processing component 302.

The memory 304 is configured to store different types of data to support the operations of the device 300. Examples of such data include instructions, contact data, phone book data, messages, pictures, videos, and so on for any application or method that operates on the device 300. The memory 304 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk or optical disk.

The power supply component 306 supplies power for different components of the device 300. The power supply component 306 may include a power supply management system, one or more power supplies, and other components associated with generating, managing and distributing power for the device 300.

The multimedia component 308 includes a screen for providing an output interface between the device 300 and a user. In some embodiments, the screen may include a liquid crystal display (LCD) and/or a touch panel (TP). If the screen includes a touch panel, the screen may be implemented as a touch screen for receiving an input signal from a user. The touch panel may include one or more touch sensors for sensing a touch, a slide and a gesture on the touch panel. The touch sensor may not only sense a boundary of a touching or sliding movement, but also detect duration and pressure related to the touching or sliding operation. In some embodiments, the multimedia component308 may include a front camera and/or a rear camera. When the device 300 is in an operation mode, such as a shooting mode or a video mode, the front camera and/or the rear camera can receive external multimedia data. Each of the front camera and the rear camera may be a fixed optical lens system or be of a focal length and a capability of an optical zoom.

The audio component 310 is configured to output and/or input an audio signal. For example, the audio component 310 may include a microphone (MIC). When the device 300 is in an operating mode, such as a call mode, a recording mode and a speech recognition mode, the microphone is configured to receive an external audio signal. The received audio signal may be further stored in the memory 304 or sent via the communication component 316. In some embodiments, the audio component 310 also includes a speaker for outputting an audio signal.

The I/O interface 312 may provide an interface between the processing component 302 and peripheral interface modules. The above peripheral interface modules may include a keyboard, a click wheel, buttons and so on. Such buttons may include but not limited to: a home button, a volume button, a start button and a lock button.

The sensor component 314 includes one or more sensors for providing state assessments in different aspects for the device 300. For example, sensor component 314 can detect an open/closed state of device 300, a relative positioning of components, such as the display and keypad of device 300, and sensor component 314 can also detect a change in position of device 300 or a component of device 300, the presence or absence of user contact with device 300, orientation or acceleration/deceleration of device 300, and temperature change of device 300. The sensor component 314 may include a proximity sensor configured to detect presence of a nearby object without any physical contact. The sensor component 314 may also include an optical sensor, such as a CMOS or CCD image sensor used in an imaging application. In some embodiments, the sensor component 314 may also include an acceleration sensor, a gyroscope sensor, a magnetic sensor, a pressure sensor, or a temperature sensor.

The communication component 316 is configured to facilitate wired or wireless communication between the device 300 and other devices. The device 300 may access a wireless network based on a communication standard, such as WiFi, 2G or 3G, or a combination thereof. In some embodiments, the communication component 316 may receive a broadcast signal or broadcast-related information from an external broadcast management system via a broadcast channel. In an example, the communication component 316 may also include a near field communication (NFC) module to facilitate short-range communications. For example, the NFC module may be implemented based on a radio frequency identification (RFID) technology, an infrared data association (IrDA) technology, an ultra wide band (UWB) technology, a Bluetooth (BT) technology and other technologies.

In an example, the device 300 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing the method in any one of the above examples.

In an example, a non-transitory computer readable storage medium including instructions, such as the memory 304 including instructions, is also provided. The above instructions may be executed by the processor 320 of the device 300 to complete the above method. For example, the non-transitory computer readable storage medium may be a read-only memory (ROM), a random access memory (RAM), a CD-ROM, a magnetic tape, a floppy disk and an optical data storage device, etc.

FIG. 19 is a block diagram illustrating a network task processing device 400 based on AI according to another embodiment of the present disclosure. The device 400 may be provided as a network device. Referring to FIG. 19, the device 400 includes a processing component 422, which further includes one or more processors, and memory resources represented by a memory 432 for storing instructions, such as an application program, that may be executed by the processing component 422. The application program stored in the memory 432 may include one or more modules each corresponding to a set of instructions. In addition, the processing component 422 is configured to execute the instructions to perform the method described above.

The device 400 may also include a power supply component 426 configured to perform power management of the device 400, a wired or wireless network interface 450 configured to connect the device 400 to a network, and an input/output (I/O) interface 458. The device 400 may operate an operating system based on an operating system stored in the memory 432, such as Windows ServerTM, Mac OS XTM, UnixTM, LinuxTM, FreeBSDTM or the like.

In an example, the device 400 may be implemented by one or more application specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, for executing the method in any one of the above examples.

In an example, a non-transitory computer readable storage medium including instructions, such as the memory 432 including instructions, is also provided. The above instructions may be executed by the processor component 422 of the device 400 to complete the above method. For example, the non-transitory computer readable storage medium may be a read-only memory (ROM), a random access memory (RAM), a CD-ROM, a magnetic tape, a floppy disk and an optical data storage device, etc.

It will be further understood that "plurality" in the present disclosure means two or more, and other quantifiers are similar. The wording "and/or" describes an association relationship of an associated object, and indicates that three relationships may exist, e.g., A and/or B, which may be expressed as: A alone, both A and B, and B alone. The character "/" generally indicates an "or" relationship between the related objects. The terms "a", "the" and "said" in their singular forms in the present application and the appended claims are also intended to include plurality, unless clearly indicated otherwise in the context.

It will be understood that the terms, such as "first", "second", etc., may be used to describe various information, such information should not be limited to these terms. These terms are used only to distinguish the same type of information from each other, and do not indicate a particular order or level of importance. Indeed, the expressions "first" and "second" are used interchangeably. For example, without departing from the scope of the present disclosure, first information may be referred as second information; and similarly, the second information may also be referred as the first information.

It will be further understood that the embodiments of the present disclosure, while describing operations in a particular order in the accompanying drawings, should not be construed as requiring that the operations be performed in the particular order shown or in a serial order, or that all of the operations shown be performed in order to obtain a desired result. In some embodiments, multitasking and parallel processing are also possible or may be advantageous.

After considering the specification and practicing the present disclosure, those skilled in the art would easily conceive of other implementations of the present disclosure. The present disclosure is intended to include any variations, uses and adaptive changes of the present disclosure. These variations, uses and adaptive changes follow the general principle of the present disclosure and include common knowledge or conventional technical means in the prior art not disclosed in the present disclosure.

It is to be understood that the present disclosure is not limited to the precise construction described herein and shown in the drawings, and that various modifications and changes may be made without departing from the scope thereof. The scope of the present disclosure is to be limited only by the appended claims.

## Claims

1. A network task processing method based on artificial intelligence (AI), performed by a terminal, and comprising:
determining an AI processing decision in response to a cell access operation occurring during a process of performing, with an AI mode, a network task by the terminal, wherein the AI processing decision comprises at least one of stopping processing, based on an AI inference result, a task, forwarding the AI inference result to a target node by a node currently performing an inference task, or forwarding an AI inference model and inference data to a node subsequently performing the inference task by the node currently performing the inference task; and
processing, based on the AI processing decision, the network task.

2. The method of claim 1, wherein the determining the AI processing decision comprises:
transmitting decision-related information to a network device, wherein the decision-related information comprises at least one of: remaining computing power, storage information, a task real-time requirement, or a task accuracy requirement; and
receiving the AI processing decision transmitted by the network device, wherein the AI processing decision is determined by the network device based on the decision-related information.

3. The method of claim 1 or 2, wherein the AI processing decision comprises stopping processing, based on the AI inference result, the task, and
the processing, based on the AI processing decision, the network task comprises:
stopping processing, based on the AI inference result, the network task.

4. The method of any one of claims 1 to 3, wherein the AI processing decision comprises stopping processing, based on the AI inference result, the task, and
the processing, based on the AI processing decision, the network task comprises:
transmitting a notification message to the node currently performing the inference task, wherein the notification message is configured to instruct the node currently performing the inference task to stop performing AI inference.

5. The method of claim 1 or 2, wherein the AI processing decision comprises forwarding the AI inference result to the target node by the node currently performing the inference task, and
the processing, based on the AI processing decision, the network task comprises:
receiving the AI inference result transmitted by the target node, and performing AI-based processing for the network task based on the AI inference result.

6. The method of claim 1 or 2, wherein the AI processing decision comprises forwarding the AI inference model and the inference data to the node subsequently performing the inference task by the node currently performing the inference task, and
the processing, based on the AI processing decision, the network task comprises:
determining a source node which the terminal accesses, the target node which the terminal accesses after performing handover, the node currently performing the inference task, and the node subsequently performing the inference task; and
obtaining, based on the source node which the terminal accesses, the target node which the terminal accesses after performing the handover, the node currently performing the inference task, and the node subsequently performing the inference task, the AI inference result, and performing AI-based processing for the network task based on the AI inference result.

7. The method of claim 6, wherein the obtaining, based on the source node which the terminal accesses, the target node which the terminal accesses after performing the handover, the node currently performing the inference task, and the node subsequently performing the inference task, the AI inference result comprises:
in response to the source node being a first next generation node B (gNB), the target node being a second gNB, or a next generation node B distributed unit (gNB-DU) under a same next generation node B control unit (gNB-CU) as the first gNB, the node currently performing the inference task being a gNB, and the node subsequently performing the inference task being a gNB-CU or a gNB-DU, receiving the AI inference result transmitted by the node subsequently performing the inference task;
in response to the source node being the first gNB, the target node being the second gNB, or the gNB-DU under the same gNB-CU as the first gNB, the node currently performing the inference task being the terminal and the gNB-CU, or the terminal and the gNB-DU, and the node subsequently performing the inference task being the gNB-CU, or the gNB-DU, transmitting a first part of the inference model to the node subsequently performing the inference task, and receiving the AI inference result transmitted by the node subsequently performing the inference task;
in response to the source node being the first gNB, the target node being the second gNB, or the gNB-DU under the same gNB-CU as the first gNB, or an evolved node B (eNB), and the node currently performing the inference task being the gNB, or the terminal and the gNB-CU, or the terminal and the gNB-DU, and the node subsequently performing the inference task being the terminal, receiving the inference model transmitted by the node currently performing the inference task, and determining the AI inference result based on the inference model;
in response to the source node being the first gNB, the target node being the second gNB, or the gNB-DU under the same gNB-CU as the first gNB, the node currently performing the inference task being the gNB, or the terminal and the gNB-CU, or the terminal and the gNB-DU, and the node subsequently performing the inference task being the terminal and the gNB-CU, or the terminal and the gNB-DU, receiving the AI inference result corresponding to a second part of the inference model transmitted by the gNB-CU or the gNB-DU;
in response to the source node being the first gNB, the target node being the eNB, the node currently performing the inference task being the gNB, or the terminal and the gNB-CU, or the terminal and the gNB-DU, and the node subsequently performing the inference task being a third gNB deployed by operation administration and maintenance (OAM), receiving the AI inference result transmitted by the third gNB;
in response to the source node being the eNB, the target node being the gNB, the node currently performing the inference task being the gNB, and the node subsequently performing the inference task being the gNB deployed by the OAM, or the terminal and the gNB-CU, or the terminal and the gNB-DU, receiving the AI inference result transmitted by the node subsequently performing the inference task; and
in response to the source node being the eNB, the target node being the eNB, the node currently performing the inference task being the gNB, and the node subsequently performing the inference task being the gNB deployed by the OAM, receiving the AI inference result transmitted by a target eNB.

8. A network task processing method based on artificial intelligence (AI), performed by a network device, and comprising:
determining an AI processing decision, wherein the AI processing decision comprises at least one of stopping processing, based on an AI inference result, a task, forwarding the AI inference result to a target node by a node currently performing an inference task, or forwarding an AI inference model and inference data to a node subsequently performing the inference task by the node currently performing the inference task; and
processing, based on the AI processing decision, a network task.

9. The method of claim 8, wherein the determining the AI processing decision comprises:
receiving decision-related information, wherein the decision-related information comprises at least one of remaining computing power, storage information, a task real-time requirement, or a task accuracy requirement; and
determining, based on the decision-related information, the AI processing decision.

10. The method of claim 9, further comprising:
transmitting the AI processing decision to the terminal.

11. The method of any one of claims 8 to 10, wherein the AI processing decision comprises stopping processing, based on the AI inference result, the task, and
the method further comprises:
receiving, in response to the network device being the node currently performing the inference task, a notification message transmitted by the terminal, wherein the notification message is configured to instruct the node currently performing the inference task to stop performing AI inference; and
stopping performing the AI inference.

12. The method of any one of claims 8 to 10, wherein the AI processing decision comprises forwarding the AI inference result to the target node by the node currently performing the inference task, and
the processing, based on the AI processing decision, the network task comprises:
forwarding, in response to the network device being the node currently performing the inference task, the AI inference result to the target node.

13. The method of any one of claims 8 to 10, wherein the AI processing decision comprises forwarding the AI inference result to the target node by the node currently performing the inference task, and
the processing, based on the AI processing decision, the network task comprises:
receiving, in response to the network device being the target node which the terminal accesses after performing handover, the AI inference result forwarded by the node currently performing the inference task, and transmitting the AI inference result to the terminal.

14. The method of any one of claims 8 to 10, wherein the AI processing decision comprises forwarding the AI inference model and the inference data to the node subsequently performing the inference task by the node currently performing the inference task, and
the processing, based on the AI processing decision, the network task comprises:
forwarding, in response to the network device being the node currently performing the inference task, the AI inference model and the inference data to the node subsequently performing the inference task.

15. The method of any one of claims 8 to 10, wherein the AI processing decision comprises forwarding the AI inference model and the inference data to the node subsequently performing the inference task by the node currently performing the inference task, and
the processing, based on the AI processing decision, the network task comprises:
receiving, in response to the network device being the node subsequently performing the inference task, the AI inference model and the inference data forwarded by the node currently performing the inference task; and
determining, based on the AI inference model and the inference data, the AI inference result, and transmitting the AI inference result to the terminal.

16. A network task processing apparatus based on artificial intelligence (AI), comprising:
a processing unit, configured to determine an AI processing decision in response to a cell access operation occurring during a process of performing, with an AI mode, a network task by the terminal, and process, based on the AI processing decision, the network task, wherein the AI processing decision comprises at least one of: stopping processing, based on an AI inference result, a task, forwarding the AI inference result to a target node by a node currently performing an inference task, or forwarding an AI inference model and inference data to a node subsequently performing the inference task by the node currently performing the inference task.

17. A network task processing apparatus based on artificial intelligence (AI), comprising:
a processing unit, configured to determine an AI processing decision, and process, based on the AI processing decision, the network task, wherein the AI processing decision comprises at least one of: stopping processing, based on an AI inference result, a task, forwarding the AI inference result to a target node by a node currently performing an inference task, or forwarding an AI inference model and inference data to a node subsequently performing the inference task by the node currently performing the inference task.

18. A network task processing device based on artificial intelligence (AI), comprising:
a processor; and
a memory storing instructions executable by the processor;
wherein the instructions, when executed by the processor, cause the processor to perform the method of any one of claims 1 to 7.

19. A network task processing device based on artificial intelligence (AI), comprising:
a processor; and
a memory storing instructions executable by the processor;
wherein the instructions, when executed by the processor, cause the processor to perform the method of any one of claims 8 to 15.

20. A storage medium, storing instructions thereon, wherein the instructions, when executed by a processor, cause the processor to perform the method of any one of claims 1 to 7.

21. A storage medium, storing instructions thereon, wherein the instructions, when executed by a processor, cause the processor to perform the method of any one of claims 8 to 15.
